# FASCICULE DE BREVET EUROPEEN

(11) **EP 1 634 451 B1**
(45) Date de publication et mention de la délivrance du brevet: **11.01.2012**
(21) Numéro de dépôt: 04705840.9
(22) Date de dépôt: 28.01.2004
(51) Int. Cl.: H04N 7/167

(54) **PROCEDE ET SYSTEME AUTOMATIQUES ET ADAPTATIFS D ANALYSE ET D EMBROUILLAGE POUR DES FLUX VIDEO NUMERIQUES**
AUTOMATISCHES ADAPTIVES SYSTEM UND VERFAHREN ZUR ANALYSE UND VERWÜRFELUNG DIGITALER VIDEOSTRÖME
AUTOMATIC, ADAPTIVE SYSTEM AND METHOD FOR DIGITAL VIDEO STREAM ANALYSIS AND SCRAMBLING

(30) Priorité: 28.01.2003 FR 0300923
(43) Date de publication de la demande: 15.03.2006
(73) Titulaire: NAGRA FRANCE SAS, 75015 Paris (FR)
(72) Inventeur: LECOMTE, Daniel, F-75116 PARIS (FR); SARDA, Pierre, F-95120 ERMONT (FR); PARAYRE-MITZOVA, D., F-75018 PARIS (FR); GEORGES, Sébastien, F-75005 PARIS (FR)
(74) Mandataire: Leman Consulting S.A.
(86) Numéro de dépôt international: PCT/FR2004/050033
(87) Numéro de publication internationale: WO 2004/071090

(56) Documents cités:
- EP-B- 0 940 039
- WO-A-01/37562

## Description

La présente invention se rapporte au domaine du traitement de flux vidéo numériques.

On se propose dans la présente invention de définir un procédé et de réaliser un dispositif permettant d'embrouiller visuellement un contenu vidéo numérique.

La présente invention se rapporte plus particulièrement à un dispositif capable de transmettre de façon sécurisée un ensemble de films de haute qualité visuelle vers un écran de télévision et/ou pour être enregistré sur le disque dur ou tout autre dispositif de sauvegarde d'un boîtier reliant le réseau de télétransmission à l'écran de visualisation tel qu'un projecteur audiovisuel, un écran de télévision ou un moniteur d'ordinateur personnel, tout en préservant la qualité audiovisuelle mais en évitant toute utilisation frauduleuse comme la possibilité de faire des copies pirates de films ou de programmes audiovisuels enregistrés sur le disque dur ou tout autre dispositif de sauvegarde du boîtier décodeur.

L'invention concerne un procédé d'embrouillage de flux vidéo numériques qui se rapporte à la distribution de séquences vidéos numériques selon un format de flux nominal constitué par une succession de trames dites « frames » comprenant chacune au moins un bloc numérique regroupant un certain nombre d'éléments correspondant à des éléments vidéo simples (par exemple des coefficients) codés numériquement selon un mode précisé à l'intérieur du flux concerné et utilisé par tous les décodeurs vidéos capables de le décoder afin de pouvoir l'afficher correctement. Le mode de distribution de flux vidéo numériques auquel notre invention se rapporte comporte :
- une étape préparatoire consistant à modifier au moins un desdits éléments du flux vidéo numérique,
- une étape de transmission
   - d'un flux principal modifié conforme au format nominal, constitué par des plans contenant les blocs modifiés au cours de l'étape préparatoire et
   - par une voie séparée dudit flux principal modifié, d'une information numérique complémentaire permettant de reconstituer le flux original, sur l'équipement destinataire, en fonction dudit flux principal et de ladite information complémentaire. On définit ladite information complémentaire en tant qu'un ensemble constitué de données (par exemple des éléments décrivant le flux numérique original ou des extraits du flux d'origine) et de fonctions (par exemple, la fonction substitution ou permutation). Une fonction est définie comme contenant au moins une instruction mettant en rapport des données et des opérateurs. Ladite information complémentaire décrit les opérations à effectuer pour récupérer le flux original à partir du flux modifié.

La reconstitution du flux original s'effectue sur l'équipement destinataire à partir du flux principal modifié déjà présent sur l'équipement destinataire et de l'information complémentaire envoyée en temps réel au moment de la visualisation comprenant des données et des fonctions exécutées à l'aide de routines (ensemble d'instructions) numériques.

Dans la présente invention, on définit la notion de « flux » comme une séquence binaire structurée, constituée d'éléments simples et ordonnés représentant sous forme codée des données et répondant à un standard ou à une norme audiovisuel(le) donné(e).

Le fait d'avoir enlevé une partie des données originales du flux d'origine lors de la génération du flux principal modifié, ne permet pas la restitution dudit flux d'origine à partir des seules données dudit flux principal modifié. Le flux principal modifié est alors appelé « flux sécurisé ». La « distribution sécurisée » est une distribution de flux sécurisés.

Dans la présente invention, on entend par le terme « embrouillage » la modification d'un flux vidéo numérique par des méthodes appropriées de manière à ce que ce flux reste conforme au standard ou à la norme avec lequel ou laquelle il a été généré, tout en le rendant affichable par un lecteur (ou afficheur ou player), mais altéré du point de vue de la perception visuelle humaine.

Dans la présente invention, on entend par le terme « désembrouillage » le processus de restitution par des méthodes appropriées du flux original, le flux vidéo restitué après le désembrouillage étant identique, donc sans perte, au flux vidéo original.

On définit la notion de « scalabilité » à partir du mot anglais « scalability » qui caractérise un encodeur capable d'encoder, ou un décodeur capable de décoder, un ensemble ordonné de flux binaires de façon à produire ou reconstituer une séquence multi couches.

On définit la notion « scalabilité granulaire » à partir de l'expression en anglais « granular scalability ». On définit la granularité comme la quantité d'informations variable susceptible d'être transmise par couche d'un procédé caractérisé par une scalabilité quelconque, le procédé est alors aussi granulaire. Dans la présente invention, la scalabilité granulaire se traduit dans la propriété d'effectuer une analyse et un embrouillage a différents degrés (ou couches) de complexité.

Beaucoup de systèmes d'embrouillage ont un effet immédiat, soit le flux original est totalement embrouillé, soit le flux original n'est pas du tout embrouillé. De plus dans la plupart des systèmes de protection, les différentes séquences vidéo sont embrouillées avec le même algorithme et les mêmes paramètres de réglage. De nombreuses protections utilisées ne changent pas l'embrouillage d'un flux vidéo en fonction de son contenu, de sa structure et des conditions de transmission.

Dans la présente invention, on applique un embrouillage automatique et adaptatif du flux vidéo numérique, en fonction de sa structure, de son contenu, des conditions de transport du système de distribution et du profil de l'utilisateur (les informations numériques le caractérisant), et cela dans le but de réaliser une protection fiable, du point de vue de la détérioration du flux d'origine et de la résistance au piratage, pour un coût minimal, tout en assurant à la fin, la qualité de service requise par le spectateur ou le client, ainsi qu'un service personnalisé pour chaque client. L'étape d'embrouillage est précédée par une étape d'analyse à l'aide d'outils appropriés et, en fonction des résultats de cette analyse, les outils d'embrouillage sont optimisés par un moteur d'inférence interne au procédé.

On entend par « profil » de l'utilisateur, un fichier numérique comprenant des descripteurs et informations spécifiques à l'utilisateur, par exemple ses préférences culturelles et ses caractéristiques sociales et culturelles, ses habitudes d'utilisation telles que la périodicité de l'utilisation des moyens vidéos, la durée moyenne de la visualisation d'un film embrouillé, la fréquence de visualisation d'une séquence embrouillée, ou toute autre caractéristique comportementale au regard de l'exploitation de films et séquences vidéos. Ce profil se formalise par un fichier numérique ou une table numérique exploitable par des moyens informatiques.

Dans son acceptation la plus générale, le procédé d'embrouillage de flux vidéo numérique, automatique et adaptatif, comporte les étapes consistant à :
- analyser la structure et le contenu visuel dudit flux vidéo numérique avec des outils d'analyse
- embrouiller ledit flux vidéo numérique
   et comprend en outre un moteur d'inférence ou décisionnel qui sélectionne, au sein d'une bibliothèque d'outils d'embrouillages possibles, le ou les outils d'embrouillages à appliquer sur ledit flux vidéo numérique, en fonction de ladite étape d'analyse, des informations numériques relatives aux caractéristiques de l'utilisateur pour lequel le flux vidéo numérique embrouillé résultant dudit procédé est destiné, et des conditions de transport des données numériques résultantes dudit procédé, conformément à une base de règles d'embrouillage prédéfinies par l'homme de l'art.

Avantageusement, ce procédé est auto adaptatif et auto décisionnel suivant le moteur d'inférence choisi.

Selon un mode de mise en oeuvre, la décision concernant l'embrouillage à effectuer sur le flux vidéo est prise par l'homme de l'art.

Selon un autre mode de mise en oeuvre, le procédé possède un moteur d'inférence qui a la faculté d'auto-apprentissage à partir des règles élaborées par l'homme de l'art et de ses actions.

Dans une variante, ladite étape d'analyse possède plusieurs niveaux de scalabilité.

Dans une autre variante, les outils d'embrouillage possèdent plusieurs niveaux de scalabilité.

Avantageusement, le procédé d'embrouillage possède plusieurs niveaux de scalabilité granulaire.

Avantageusement, le procédé d'embrouillage possède la capacité de prendre des décisions d'embrouillage de façon à respecter les contraintes de débit des réseaux de télécommunication par lesquels l'information complémentaire est transmise à l'utilisateur pour lequel ledit flux embrouillé est destiné.

Avantageusement, le procédé d'embrouillage possède la capacité de prendre des décisions d'embrouillage à partir de l'analyse du flux vidéo en temps réel.

Avantageusement, le procédé d'embrouillage a la capacité d'adapter en temps réel la quantité de l'information complémentaire en fonction des ressources immédiates en débit et des conditions de transport des réseaux de télécommunication.

Avantageusement, le procédé d'embrouillage possède la capacité d'effectuer l'analyse et l'embrouillage au préalable de la transmission à l'utilisateur.

Avantageusement, le moteur d'inférence possède la capacité de prendre des décisions d'embrouillage de façon à respecter les contraintes, les caractéristiques et les performances du boîtier décodeur de l'utilisateur pour lequel ledit flux embrouillé est destiné.

Avantageusement, le moteur d'inférence possède la capacité de prendre des décisions d'embrouillage en fonction des décisions d'embrouillage qu'il a prises précédemment.

Avantageusement, les outils d'embrouillage utilisés pour traiter une partie du flux sont paramétrés par les caractéristiques d'origine des parties précédemment embrouillées, lesdites caractéristiques étant stockées dans l'information complémentaire.

Avantageusement, lesdites valeurs aléatoires utilisées par lesdits outils d'embrouillage sont générées par un générateur de variables aléatoires, et sont passées en paramètres aux dits outils d'embrouillage.

Avantageusement, le procédé d'embrouillage possède un moteur d'inférence qui prend des décisions concernant l'embrouillage à effectuer sur le flux vidéo de façon automatique et auto adaptative en fonction du profil de l'utilisateur.

Avantageusement, le procédé d'embrouillage possède un moteur d'inférence qui prend des décisions concernant l'embrouillage à effectuer sur le flux vidéo de façon automatique et auto adaptative en fonction des conditions de transport.

Avantageusement, le procédé d'embrouillage s'applique à des flux vidéo numériques structurés issus d'une norme ou d'un standard vidéo numérique.

L'invention concerne également un système pour la mise en oeuvre du procédé qui comprend un module d'analyse de la structure et du contenu visuel du flux vidéo numérique, un module constitué par une bibliothèque d'outils d'embrouillage, un module d'embrouillage du flux vidéo numérique et un module moteur d'inférence ou décisionnel capable de faire la synthèse des informations d'analyse et des outils d'embrouillage disponibles, et de générer les instructions d'embrouillage en fonction des résultats de l'analyse, des outils d'embrouillage disponibles, du profil de l'utilisateur et des conditions de transport, conformément à la base de règles qu'il contient.

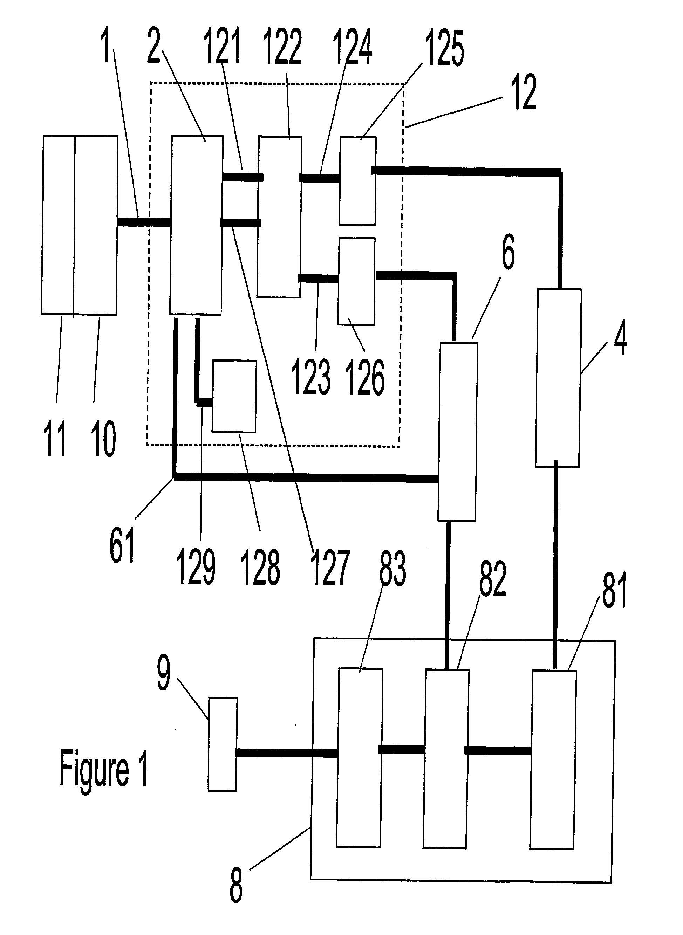

Considérons un exemple de réalisation du système général de protection de flux vidéo. Sur le dessin en annexe, la figure 1 représente un système client-serveur comportant un mode de réalisation particulier du système d'embrouillage de flux vidéo numériques conforme à l'invention.

Le flux vidéo de type MPEG-2 que l'on souhaite sécuriser (1) est passé à un système d'analyse (2) qui génère des instructions (127) pour l'embrouillage, puis à un système d'embrouillage (122) qui va générer un flux principal modifié (124) et une information complémentaire (123) en sortie.

Le flux d'origine (1) peut être directement sous forme numérique (10) ou sous forme analogique (11). Dans ce dernier cas, le flux analogique (11) est converti par un codeur non représenté en un format numérique (10). Dans la suite du texte, nous noterons (1) le flux numérique vidéo d'entrée et (121) le flux numérique original en sortie du module d'analyse (2). Un premier flux (124), de format identique au flux numérique d'entrée (1) en dehors de ce que certains des coefficients, valeurs et/ou vecteurs ont été modifiés, est placé dans une mémoire tampon de sortie (125). L'information complémentaire (123), de format quelconque, contient les références des parties des échantillons vidéos qui ont été modifiées et est placée dans le tampon (126). Le système d'analyse (2) décide quel embrouillage adaptatif appliquer et quels paramètres du flux modifier en fonction des caractéristiques du flux d'entrée (1) et des informations numériques relatives aux caractéristiques du client (129) provenant d'une base de données clients (128). Le flux modifié (125) est ensuite transmis, via un réseau (4) de type hertzien, câble, satellite, etc., au boîtier décodeur (Set-Top-Box ou STB) du client (8), et plus précisément dans sa mémoire (81) de type RAM, ROM, disque dur. Lorsque le destinataire (8) fait la demande de visualiser une séquence vidéo présente dans sa mémoire (81), deux éventualités sont possibles :
- soit le destinataire (8) ne possède pas les droits nécessaires pour visualiser la séquence vidéo. Dans ce cas, le flux (125) généré par le système d'embrouillage (122) présent dans sa mémoire (81) est passé au système de synthèse (82), qui ne le modifie pas et le transmet à l'identique à un lecteur vidéo classique (83) et son contenu, fortement dégradé visuellement, est affiché par le lecteur (83) sur un écran (9).
- soit le destinataire (8) possède les droits pour regarder la séquence vidéo. Dans ce cas, le système de synthèse fait une demande de visualisation au serveur (12) contenant l'information nécessaire (126) à la récupération de la séquence vidéo originale (1). Le serveur (12) envoie en fonction des conditions de transport (61) par la liaison (6) via des réseaux de transmission type ligne téléphonique analogique ou numérique, DSL (Digital Subscriber Line), BLR (Boucle Locale Radio), DAB (Digital Audio Broadcasting) ou de télécommunications mobiles numériques (GSM, GPRS, UMTS), l'information complémentaire appropriée (126) permettant la reconstitution de la séquence vidéo de façon à ce que le client (8) puisse visualiser et/ou stocker la séquence vidéo. Le système de synthèse (82) procède alors au désembrouillage de la vidéo par la reconstruction du flux d'origine en combinant le flux principal modifié (125) et l'information complémentaire (126). Le flux vidéo ainsi obtenu en sortie du système de synthèse (82) est alors transmis au lecteur vidéo classique (83) et le film vidéo original est affiché à l'écran (9).

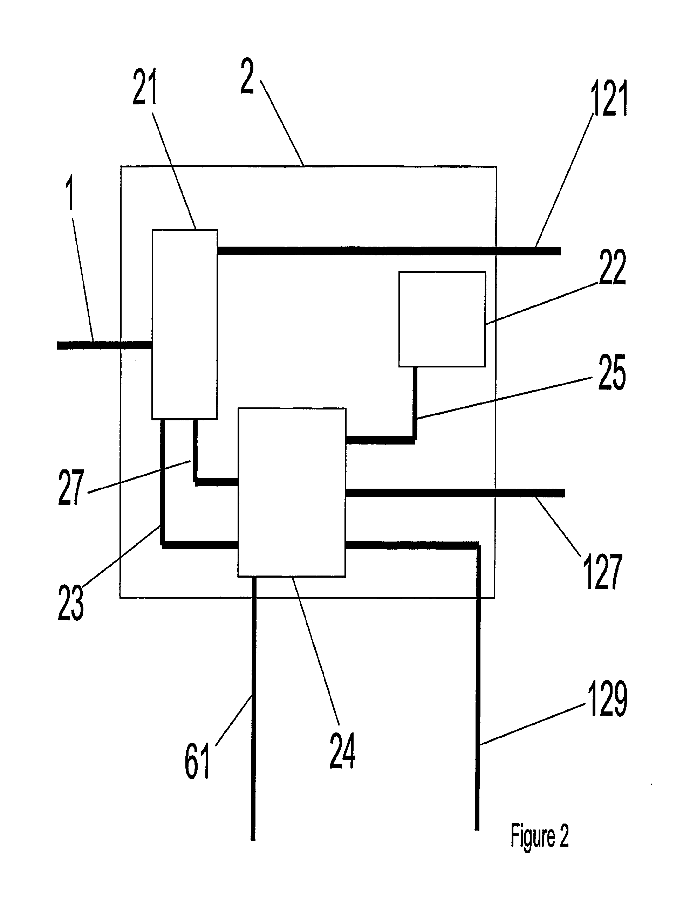

Une réalisation préférée du système automatique et adaptatif d'analyse est illustrée sur la figure 2.

Afin d'optimiser l'application de la technologie décrite pour la protection de flux vidéo, il est nécessaire d'appliquer l'embrouillage le plus approprié en fonction du contenu analysé. Pour cela, le module d'analyse (2) analyse le flux vidéo numérique (1) afin d'en extraire certaines informations (23) et en déduire les outils d'embrouillage et les paramètres associés les plus adaptés (127). Le système est ainsi adaptatif en ce qu'il s'adapte au contenu et à la structure du flux qu'il analyse; et décisionnel en ce qu'il décide lui-même de l'embrouillage à effectuer.

Le système d'analyse (2) est constitué de trois parties :
- un module d'analyse (21) contenant des outils d'analyse,
- une bibliothèque d'outils d'embrouillages (22) et
- un moteur d'inférence (24) contenant les règles définies par l'homme de l'art permettant de sélectionner les outils d'embrouillages contenus dans la bibliothèque d'outils (22) à appliquer sur le flux vidéo numérique (121) en sortie du module d'analyse (2). Le choix des outils d'embrouillages (127) est effectué en fonction des résultats de l'étape d'analyse (23), des informations numériques relatives aux droits de l'utilisateur (129) provenant d'une base de données client (128), et des conditions de transport (61) de l'information complémentaire (123) sur la connexion (6). Les outils d'embrouillages à appliquer (127) sont choisis par le moteur d'inférence (24) parmi une bibliothèque d'outils (22) via le lien (25). Ce choix (127) est transmis au module d'embrouillage (122). Le moteur d'inférence (24) peut demander une analyse supplémentaire en envoyant une requête à cet effet (27) au module d'analyse (21).

Le système se caractérise par une scalabilité granulaire concernant la complexité d'analyse du flux numérique. A chaque niveau ou couche de scalabilité correspond une analyse plus ou moins approfondie et complexe du flux vidéo numérique. On considère comme niveaux de scalabilité de l'analyse du flux vidéo numérique, l'étude de caractéristiques propres à un niveau structurel donné du flux : au niveau des GOP (« Groups Of Pictures », ou Groupes de Plans), image ou plan, slice ou « tranches », macrobloc, bloc. Par exemple, dans le cas du niveau de scalabilité concernant les images, seules les informations des en-têtes d'images sont étudiées.

De même, le système se caractérise par une scalabilité granulaire concernant la complexité des outils d'embrouillage à utiliser. Celle-ci se caractérise par la possibilité de modifier plus ou moins un ou plusieurs éléments du même type ou de type différent, suivant le niveau de scalabilité souhaité. Par exemple, dans le cas d'outils d'embrouillage de substitution des coefficients DC, le système substitue un, plusieurs ou tous les coefficients DC par macrobloc sélectionné. Le moteur d'inférence possède lui aussi des propriétés de scalabilité granulaire en ce qu'il utilise les propriétés de scalabilité des outils d'analyse et d'embrouillage. Par exemple, le moteur d'inférence choisira un niveau de scalabilité plus ou moins profond en ce qui concerne les outils d'analyse en fonction du temps de traitement dont il dispose pour effectuer l'embrouillage (temps réel ou non). De même, le moteur d'inférence choisira un niveau de scalabilité plus ou moins profond en ce qui concerne les outils d'embrouillage en fonction des conditions de transport de l'information complémentaire.

De préférence, le moteur d'inférence (24) choisira un niveau de scalabilité plus ou moins profond des outils au sein de la bibliothèque d'outils d'embrouillage (22), en fonction des caractéristiques techniques du boîtier décodeur client (8) à qui est destiné le flux embrouillé (125), récupérées depuis une base de données client (128). En effet, plus le niveau de scalabilité choisi est profond, plus les ressources matérielles et logicielles nécessaires pour le désembrouillage du flux protégé (125) sont importantes. Par exemple, un outil d'embrouillage concernant les vecteurs de mouvement ne sera pas utilisé si le décodeur du client ne dispose pas de ressources de calcul suffisantes, dans ce cas, une modification d'informations des en-têtes d'images I lui sera préférée.

En conséquence, ce système a l'avantage de pouvoir limiter le débit et la taille de l'information complémentaire. Le coût de la transmission de l'information complémentaire est ainsi maîtrisé par l'homme de l'art qui gère le système d'embrouillage.

Une réalisation est un système auto adaptatif d'embrouillage en ce qu'il est capable de prendre des décisions concernant l'embrouillage du flux automatiquement et indépendamment de l'homme de l'art.

Une autre réalisation est un système manuel où l'homme de l'art choisira les outils d'embrouillage à utiliser.

Une autre réalisation est un système à la fois manuel, où l'homme de l'art choisira les outils d'embrouillage et le niveau de scalabilité d'analyse à utiliser, mais aussi automatique, où le système, partant des règles préalablement définies par l'homme de l'art dans le moteur d'inférence, fait automatiquement des adaptations en fonction du contenu pour optimiser ces paramètres. Le système élabore de nouvelles règles et complète ainsi le moteur d'inférence en fonction des actions de l'homme de l'art. Par exemple, si l'homme de l'art prend plusieurs fois (au moins trois fois), pour plusieurs flux vidéo différents, la même décision d'appliquer un niveau de scalabilité des outils d'embrouillage plus complexe, après les trente premières secondes de vidéo, alors le système établit automatiquement une nouvelle règle consistant à appliquer un niveau de scalabilité plus complexe des outils d'embrouillage après les trente premières secondes de chaque flux. Cette règle permet, par exemple, de laisser trente secondes de vidéo faiblement embrouillée au début de chaque flux.

Les outils d'analyse (21) fournissent des informations sur la structure du flux binaire (1) et sur son contenu. Un flux vidéo numérique est généralement constitué de séquences d'images (ou plans ou frames (trames)), regroupées en groupes d'images « Groups Of Pictures » (GOPs) pour MPEG-2 par exemple. Pour MPEG-4, les plans ou les VOPs (Video Object Plane) sont regroupés dans des « Groups Of Videos » (GOVs). Une image peut être de type I (Intra), P (Prédite), B (Bidirectionnelle). Un plan S est un plan contenant un objet statique, qui est une image fixe décrivant le fond de l'image ou bien un plan codé en utilisant une prédiction basée sur la compensation de mouvement globale (GMC) à partir d'un plan de référence antérieur. Les images I sont les images de référence, elles sont entièrement codées et sont donc de taille élevée et ne contiennent pas d'information sur le mouvement. Les plans P sont des plans prédits à partir de plans précédents, que ce soit I et/ou P par des vecteurs de mouvement dans une seule direction, dite en avant « forward ». Les plans B sont dits bidirectionnels, ils sont liés aux plans I et/ou P les précédant ou les suivant par des vecteurs de mouvement dans les deux directions temporelles (en avant et en arrière ou « backward »). Les vecteurs de mouvement représentent des vecteurs bidimensionnels utilisés pour la compensation de mouvements, qui procurent la différence de coordonnées entre une partie de l'image courante et une partie de l'image de référence. Une image peut être organisée par slices ou tranches, par exemple comme dans MPEG-2. Une image ou une trame est constituée de macroblocs, eux-mêmes constitués de blocs, contenant des éléments décrivant le contenu du flux vidéo, par exemple les coefficients DC issus d'une transformation fréquentielle et relatifs au fondamental, c'est-à-dire à la valeur moyenne des coefficients d'un bloc, ou alors les coefficients AC relatifs aux fréquences plus élevées. Les coefficients AC sont codés en « run » et « level », les « runs » étant le nombre de zéros entre deux coefficients AC non nuls et les « levels », la valeur des coefficients AC non nuls. Les blocs contiennent également de l'information sur les vecteurs de mouvement.

Avec les outils d'analyse (21), on extrait des informations (23) sur la structure et le contenu des images ou des VOPs, des slices, des macroblocs et des blocs, pour adapter et optimiser leur embrouillage. Plusieurs complexités différentes dans l'utilisation de l'ensemble des outils sont élaborées suivant que l'application est temps réel (par exemple lorsque l'embrouillage est appliqué à un flux vidéo diffusé en temps réel) ou que les contenus sont embrouillés complètement avant transmission, laissant ainsi le temps nécessaire à toute forme d'analyse (analyse plus ou moins approfondie des images/VOPs afin d'en extraire le maximum d'information). En temps réel, l'analyse des corrélations entre images/VOPs ne peut se faire que sur quelques images/VOPs successifs, réduisant ainsi les paramètres d'étude, alors qu'avec une analyse approfondie sans contraintes temps réel, toute latitude sur le nombre d'images/VOPs successifs à analyser est possible.

Dans le cas de l'embrouillage et de la transmission du flux vidéo (1) en temps réel, le système d'analyse (2) doit décider en temps réel des outils d'embrouillage à appliquer (127). On utilise alors des outils d'analyse et d'embrouillage (127) relativement « simples » et en quantité adaptée aux contraintes du temps réel.

Dans le cas d'un embrouillage sans contraintes temps réel, le système d'analyse (2) fait une analyse approfondie pour utiliser les informations les plus pertinentes (23) afin de décider des outils d'embrouillage (127). La décision du type d'embrouillage (127) peut être générée automatiquement et de manière adaptative par le moteur d'inférence (24) ou prise manuellement par l'homme de l'art.

Dans un exemple de réalisation particulier, l'homme de l'art décide de l'embrouillage à effectuer en visionnant le flux embrouillé sur une console et en adaptant les paramètres d'embrouillage en fonction de la dégradation apportée et des résultats escomptés.

La présente invention sera mieux comprise à la lecture d'un exemple de réalisation particulier du module d'analyse (2) appliqué à des flux de type MPEG-2.

Le module outils d'analyse (21) comprend les outils pour effectuer les analyses suivantes :
- Analyse des coefficients AC (run, level) et DC afin de déterminer le contenu des scènes et les parties pertinentes à embrouiller, consistant à comparer leurs valeurs (partie différentielle des coefficients DC, level des coefficients AC) à des seuils prédéfinis par l'homme de l'art. Par cette analyse, on peut ainsi détecter des zones homogènes, des zones contenant beaucoup de détails, ou encore des contours.
- Analyse de la taille des macroblocs par le nombre de coefficients AC qu'ils contiennent.
- Analyse des valeurs des pas de quantification, utilisés lors du codage des coefficients AC et ou DC et transmis au sein du flux vidéo numérique, pour détecter les contours.
- Comptage du nombre relatif de blocs intra dans les images P et B afin de détecter un changement de scène.
- Utilisation de la taille et de la valeur des vecteurs de mouvements, et leur répartition dans chaque image au sein d'un GOP pour trouver des corrélations de mouvements et délimiter différents objets caractérisés par leur uniformité de déplacement.

A ce module d'analyse est associée une bibliothèque d'outils d'embrouillage (22), qui contient de manière non exhaustive :
■ un outil consistant à substituer un coefficient AC par une valeur aléatoire de même taille.
■ un outil consistant à substituer un coefficient AC par son opposé.
■ un outil consistant à substituer un coefficient AC par une valeur aléatoire de taille différente.
■ un outil consistant à substituer un coefficient DC par une valeur aléatoire de même taille.
■ un outil consistant à substituer un coefficient DC par son opposé.
■ un outil consistant à substituer un coefficient DC par une valeur aléatoire de taille différente.
■ un outil consistant à substituer un vecteur de mouvement par une valeur aléatoire.

Avantageusement, lesdites valeurs aléatoires utilisées par lesdits outils d'embrouillage sont générées par un générateur de variables aléatoires, et sont passées en paramètres auxdits outils d'embrouillage.

Le troisième module est le moteur d'inférence décisionnel (24). Le choix des combinaisons de transformations à effectuer (127) (nombre, type et coefficients à substituer, nombre d'images où les transformations s'appliquent) demande un paramétrage manuel ou automatique, et dans la présente invention, c'est le rôle du moteur d'inférence (24). Les règles de décision du moteur d'inférence, permettant de déterminer les outils d'embrouillage à appliquer, peuvent varier au fur et à mesure du traitement du flux vidéo d'origine (1).

Dans un exemple de réalisation, les décisions du moteur d'inférence (24) d'appliquer des outils d'embrouillage sur une portion du flux sont fonction des décisions de traitement prises pour les portions précédentes du flux à embrouiller. Par exemple, si une image I d'un flux MPEG-2 a été entièrement embrouillée en utilisant un niveau de scalabilité profond, l'effet de dégradation se propage fortement sur les trames suivantes et le moteur d'inférence (24) utilisera des outils dégradant moins les images B et P suivantes. Dans le cas où les outils appliqués dégradent peu une image I (inversion du signe des coefficients DC de l'image par exemple) ou ont un niveau de scalabilité peu profond, le moteur d'inférence (24) décidera d'utiliser des outils d'embrouillage dégradant fortement les images B et P qui suivent.

Il (24) tient compte des droits de l'utilisateur (129) provenant d'une base de données clients (128) et des contraintes du réseau telles que le débit en ligne (61) ou le volume maximum d'information à transmettre (61). Par exemple, on peut souhaiter modifier tous les coefficients DC de toutes les images I de façon à ce que le film ne soit pas acceptable de point de vue de la perception visuelle humaine. Toutefois, plus le nombre de modifications est important, plus la taille de l'information complémentaire est importante. La solution consiste donc à modifier tous les coefficients DC à l'aide d'un algorithme général qui ne nécessite pas de stocker les valeurs d'origine dans l'information complémentaire (par exemple une inversion de signe). Ainsi, lors du désembrouillage, il suffira d'inverser à nouveau le signe des coefficients DC pour obtenir la valeur d'origine. L'inconvénient de cette méthode est que l'embrouillage obtenu n'est pas très difficile à être repéré par un utilisateur mal intentionné qui pourra alors facilement inverser de nouveau le signe pour reconstituer le flux d'origine.

Pour rendre le procédé difficilement détectable, une ou plusieurs autres méthodes d'embrouillage sont effectuées en parallèle : Par exemple modifier quelques coefficients AC en les remplaçant par des valeurs aléatoires. Le fait de ne pas les modifier systématiquement et de retirer la valeur originale du flux rend l'embrouillage obtenu difficilement détectable donc difficilement cassable. De plus, l'image reste non visualisable grâce aux modifications systématiques des coefficients DC. Les coefficients AC à modifier sont choisis grâce à un algorithme de détection d'éléments intéressants de façon à ce que, si un pirate parvenait à contourner la protection liée aux coefficients DC, il se retrouverait avec une vidéo dont les éléments les plus intéressants (acteurs, mouvements) seraient encore embrouillés, grâce à la modification des coefficients AC. Seuls les coefficients AC supérieurs à un seuil préalablement défini par l'homme de l'art, seront alors modifiés. Ces valeurs ont en effet tendance à être élevées pour les contours des objets de la vidéo.

De même, pour rendre les modifications encore plus difficilement décelables et donc le flux vidéo embrouillé (125) plus difficilement corrigible, le moteur d'inférence (24) décide d'appliquer des outils d'embrouillage paramétrés par les caractéristiques des éléments d'origine substitués. Par exemple, un premier coefficient DC est substitué par une valeur aléatoire de taille différente, sa vraie valeur, sa taille, ainsi que sa position d'origine étant stockées dans l'information complémentaire (126). Les n coefficients DC suivants sont alors modifiés par l'addition (ou tout autre opération binaire inversible prenant deux paramètres en entrée comme un OU exclusif par exemple) d'un mot binaire spécifique aux caractéristiques d'origine du coefficient DC substitué. Pour pouvoir désembrouiller ces n coefficients DC, le boîtier décodeur du client (8) se servira du contenu de l'information complémentaire (126) relative au premier coefficient DC pour traiter les n coefficients DC suivants selon l'opération inverse. Un autre exemple de réalisation est celui pour des flux de type MPEG-4, dont le module d'analyse (21) contient les outils suivants :
- Analyse des coefficients AC (run, level) et DC afin de déterminer le contenu des scènes et les parties pertinentes à embrouiller, consistant à comparer leurs valeurs (partie différentielle des coefficients DC, level des coefficients AC) à des seuils prédéfinis par l'homme de l'art. Par cette analyse, on peut ainsi détecter des zones homogènes, des zones contenant beaucoup de détails, ou encore des contours.
- Analyse de la taille des macroblocs par le nombre de coefficients AC qu'ils contiennent.
- Analyse des valeurs des pas de quantification, utilisés lors du codage des coefficients AC et ou DC et transmis au sein du flux vidéo numérique, pour détecter les contours.
- Comptage du nombre relatif de blocs intra dans les images P et B afin de détecter un changement de scène.
- Utilisation de la taille et de la valeur des vecteurs de mouvements, et leur répartition dans chaque image au sein d'un GOP pour trouver des corrélations de mouvements et délimiter différents objets caractérisés par leur uniformité de déplacement.
- Etudes de certaines valeurs (les vecteurs de mouvements par exemple), sur plusieurs VOPs successifs, afin de trouver le nombre idéal de VOPs successifs à transformer.

A ce module d'analyse est associée une bibliothèque d'outils d'embrouillage (22), qui contient de manière non exhaustive :
■ un outil consistant à substituer un coefficient AC par une valeur aléatoire de même taille.
■ un outil consistant à substituer un coefficient AC par son opposé.
■ un outil consistant à substituer un coefficient AC par une valeur aléatoire de taille différente.
■ un outil consistant à substituer un coefficient DC par une valeur aléatoire de même taille.
■ un outil consistant à substituer un coefficient DC par son opposé.
■ un outil consistant à substituer un coefficient DC par une valeur aléatoire de taille différente.
■ un outil consistant à substituer un vecteur de mouvement par une valeur aléatoire.

Avantageusement, lesdites valeurs aléatoires utilisées par lesdits outils d'embrouillage sont générées par un générateur de variables aléatoires, et sont passées en paramètres auxdits outils d'embrouillage.

Le troisième module, le moteur d'inférence (24) exploite les dépendances temporelles entre VOPs qui sont la base de la compression de type MPEG, qui permettent de ne transformer qu'une partie des éléments présents dans le flux, tout en assurant une bonne protection des objets ainsi traités, le traitement se propageant grâce à ces dépendances. De plus, ne traiter qu'une partie des coefficients d'un VOP est parfaitement cohérent et efficace, puisque dans un même VOP les coefficients voisins sont corrélés.

Ainsi, on s'aperçoit qu'en fonction du contenu du flux vidéo, on peut ne transformer qu'une partie de l'information tout en s'assurant que la protection finale soit bonne. En fonction du résultat escompté on arrive à généraliser les transformations, sous forme d'une série de paramètres à appliquer : VOPs traités, fréquence de traitement des VOPs successifs de même type, fréquence des macroblocs traités dans chaque VOP, et pour ces macroblocs, nombre de blocs traités et type de solution appliquée aux coefficients AC ou DC et aux valeurs des vecteurs de mouvement différentiels.

En fonction des résultats de l'analyse (23), certaines combinaisons d'outils d'embrouillage (127) sont plus intéressantes à mettre en oeuvre que d'autres. Ainsi, vu leur rôle très important dans le flux, les plans I sont embrouillés en priorité. En fonction de l'espacement entre les plans I successifs et la qualité de codage des plans P suivants dans le flux, le moteur d'inférence choisit de les embrouiller plus ou moins fortement. Si deux plans I sont séparés par un grand nombre de plans P et/ou B, tout dépend ensuite de la qualité des plans P : si les plans P suivants contiennent peu de macroblocs codés en Intra, le moteur d'inférence choisira des outils d'embrouillage dégradant fortement le rendu visuel (substitution de coefficients DC par des valeurs aléatoires) du plan I les précédant. Sinon, les blocs Intra des plans P suivants vont reconstituer le rendu visuel, dans ce cas-là le moteur d'inférence privilégie l'application d'outils d'embrouillage sur les plans P.

Concernant les plans P, deux informations sont particulièrement importantes : Le nombre de macroblocs codés en Intra dans le VOP, car ces macroblocs contiennent des informations importantes pour la reconstruction du flux : Plus il y en a, meilleure est la qualité du flux. En effet, ils contiennent l'information qui ne peut être déduite du mouvement de l'objet vidéo qui se déplace, mais dont on ne sait pas par quel autre objet il va être remplacé. Par exemple, dans une scène qui représente l'ouverture d'une porte, on ne peut pas deviner ce qu'il y a derrière la porte : Pour réactualiser cette information, il faut remplacer les données du plan I de référence ou des plans P précédents. La deuxième information est celle du mouvement contenu dans les vecteurs de mouvement différentiels. L'homme de l'art, connaissant ces propriétés des flux vidéo numériques, définit des règles pour le moteur d'inférence, qui permettent d'optimiser la dégradation visuelle générée par l'embrouillage en fonction de la quantité d'information substituée. Ainsi, plus l'information est importante pour le rendu visuel du flux vidéo, plus le moteur d'inférence doit l'embrouiller.

Dans un exemple particulier de réalisation, le moteur d'inférence (24) grâce aux données client (129) provenant de la base de données clients (128 connaît le nombre de flux vidéos déjà visualisés par le client (8). Suivant le nombre des flux vidéos déjà visualisés, le moteur d'inférence (24) décide de laisser une plage non embrouillée plus ou moins longue, au début du flux embrouillé progressivement (121).

Les exemples de réalisation du système pour flux numérique de type MPEG-2 et MPEG-4 décrits ci-dessus sont transposables pour n'importe quel flux numérique structuré, défini par une autre norme ou un autre standard audiovisuel numérique.

## Revendications

1. Procédé d'embrouillage de flux vidéo numériques, automatique et adaptatif, comportant les étapes consistant à :
• analyser la structure et le contenu visuel dudit flux vidéo numérique
• embrouiller ledit flux vidéo numérique **caractérisé en ce que** ladite étape d'embrouillage est régulée par un moteur d'inférence ou décisionnel qui sélectionne, au sein d'une bibliothèque d'outils d'embrouillages possibles, le ou les outils d'embrouillages à appliquer sur ledit flux vidéo numérique, en fonction de ladite étape d'analyse, des informations numériques relatives aux caractéristiques de l'utilisateur pour lequel le flux vidéo numérique embrouillé résultant dudit procédé est destiné, et des conditions de transport des données numériques résultantes dudit procédé, conformément à une base de règles d'embrouillages prédéfinies.

2. Procédé d'embrouillage de flux vidéo numériques, selon la revendication 1, **caractérisé en ce que** le moteur d'inférence est auto adaptatif et auto décisionnel.

3. Procédé d'embrouillage de flux vidéo numériques, selon la revendication 2, **caractérisé en ce que** le moteur d'inférence possède la capacité d'auto-apprentissage, élaborant de nouvelles règles de décision à partir de règles précédemment établies.

4. Procédé d'embrouillage de flux vidéo numériques, selon la revendication 1, **caractérisé en ce que** ladite analyse possède plusieurs niveaux de scalabilité.

5. Procédé d'embrouillage de flux vidéo numériques, selon la revendication 1, **caractérisé en ce que** les outils d'embrouillages possèdent plusieurs niveaux de scalabilité.

6. Procédé d'embrouillage de flux vidéo numériques, selon l'une au moins des revendications 1, 4 ou 5, **caractérisé en ce que** l'embrouillage possède plusieurs niveaux de scalabilité granulaire.

7. Procédé d'embrouillage de flux vidéo numériques, selon la revendication 1, **caractérisé en ce que** le moteur d'inférence possède la capacité de prendre des décisions d'embrouillage de façon à respecter les contraintes des réseaux de télécommunication par lesquels l'information complémentaire est transmise à l'utilisateur pour lequel ledit flux embrouillé est destiné.

8. Procédé d'embrouillage de flux vidéo numériques, selon la revendication 1, **caractérisé en ce qu'**il possède la capacité de prendre des décisions d'embrouillage à partir de l'analyse du flux vidéo en temps réel.

9. Procédé d'embrouillage de flux vidéo numériques, selon la revendication 8, **caractérisé en ce qu'**il a la capacité d'adapter en temps réel la quantité de l'information complémentaire en fonction des ressources immédiates en débit et des conditions de transport des réseaux de télécommunication.

10. Procédé d'embrouillage de flux vidéo numériques, selon la revendication 1, **caractérisé en ce qu'**il possède la capacité d'effectuer l'analyse et l'embrouillage au préalable de la transmission à l'utilisateur.

11. Procédé d'embrouillage de flux vidéo numériques, selon l'une au moins des revendications 1 à 10, **caractérisé en ce que** le moteur d'inférence possède la capacité de prendre des décisions d'embrouillage de façon à respecter les contraintes, les caractéristiques et les performances du boîtier décodeur de l'utilisateur pour lequel ledit flux embrouillé est destiné.

12. Procédé d'embrouillage de flux vidéo numériques, selon l'une au moins des revendications 1 à 11, **caractérisé en ce que** le moteur d'inférence possède la capacité de prendre des décisions d'embrouillage en fonction des décisions d'embrouillage qu'il a prises précédemment.

13. Procédé d'embrouillage de flux vidéo numériques, selon l'une au moins des revendications 1 à 12, **caractérisé en ce que** les outils d'embrouillage utilisés pour traiter une partie du flux sont paramétrés par les caractéristiques d'origine des parties précédemment embrouillées, lesdites caractéristiques étant stockées dans l'information complémentaire.

14. Procédé d'embrouillage de flux vidéo numériques, selon l'une au moins des revendications 1 à 13, **caractérisé en ce que** lesdites valeurs aléatoires utilisées par lesdits outils d'embrouillage sont générées par un générateur de variables aléatoires, et sont passées en paramètres auxdits outils d'embrouillage.

15. Procédé d'embrouillage de flux vidéo numériques, selon l'une au moins des revendications 1 à 14, **caractérisé en ce que** la décision concernant l'embrouillage à effectuer sur le flux vidéo est automatique et auto adaptative en fonction du profil de l'utilisateur.

16. Procédé d'embrouillage de flux vidéo numériques, selon l'une au moins des revendications 1 à 15, **caractérisé en ce que** la décision concernant l'embrouillage à effectuer sur le flux vidéo est automatique et auto adaptative en fonction des conditions de transport.

17. Procédé d'embrouillage de flux vidéo numériques, selon l'une au moins des revendications 1 à 16, **caractérisé en ce qu'**il est appliqué à des flux vidéo numériques structurés issus d'une norme ou d'un standard vidéo numérique.

18. Système pour la mise en oeuvre du procédé selon l'une quelconque des revendications précédentes, **caractérisé en ce qu'**il comprend un module d'analyse de la structure et du contenu visuel du flux vidéo numérique (21), un module bibliothèque d'outils d'embrouillage (22), un module d'embrouillage du flux vidéo numérique (122) et un module moteur d'inférence ou décisionnel (24) capable de faire la synthèse des informations d'analyse et des outils d'embrouillage disponibles, et de générer les instructions d'embrouillage en fonction des résultats de l'analyse, des outils d'embrouillages disponibles, du profil de l'utilisateur et des conditions de transport, conformément à la base de règles qu'il contient.

## Claims

1. A process for automatically and adaptively scrambling digital video streams comprising:
• analyzing the structure and the visual content of said digital video stream
• scrambling said digital video stream **characterized in that** said scrambling phase is regulated by an inference or decisional engine that selects from a library of possible scrambling tools one or more scrambling tools to be applied to said digital video stream, according to said phase of the analysis, the digital information relative to the characteristics of the user, for which the scrambled digital video stream resulting from said process is intended, and the transport conditions of digital data resulting from the aforementioned process, in accordance with a base of predefined scrambling rules.

2. The process of scrambling of the digital video stream, according to claim 1, **characterized in that** the inference engine is self-adaptive and self-decisional.

3. The process of scrambling of the digital video stream, according to claim 2, **characterized in that** the inference engine has a self-teaching capacity, determining new decision rules from the rules previously established.

4. The process of scrambling of the digital video stream, according to claim 1, **characterized in that** said analysis has several levels of scalability.

5. The process of scrambling of the digital video stream, according to claim 1, **characterized in that** the scrambling tools have several levels of scalability.

6. The process of scrambling of the digital video stream, according to at least one of the claims 1, 4 or 5, **characterized in that** the scrambling has several levels of granular scalability.

7. The process of scrambling of the digital video stream, according to claim 1, **characterized in that** the inference engine has the capacity to make scrambling decisions in such a manner as to respect the constraints of telecommunication networks via which complementary information is transmitted to the user for which the scrambled stream is intended.

8. The process of scrambling of the digital video stream, according to claim 1, **characterized in that** it has the capacity to make scrambling decisions from the analysis of the video stream in real time.

9. The process of scrambling of the digital video stream, according to claim 8, **characterized in that** it has the capacity to adapt a quantity of complementary information in real time according to immediate resources in speed and transport conditions of the telecommunication networks.

10. The process of scrambling of the digital video stream, according to claim 1, **characterized in that** it has the capacity to perform an analysis and scrambling prior to transmission to the user.

11. The process of scrambling of the digital video stream, according to at least one of the claims 1 to 10, **characterized in that** the inference engine has the capacity to make scrambling decisions in such a manner as to respect the constraints, the features and the performances of a decoder box of the user for which the scrambled stream is intended.

12. The process of scrambling of the digital video stream, according to at least one of the claims 1 to 11, **characterized in that** the inference engine has the capacity to make scrambling decisions according to scrambling decisions previously made.

13. The process of scrambling of the digital video stream, according to at least one of the claims 1 to 12, **characterized in that** scrambling tools used to process a part of the stream are parameterized by original characteristics of previously scrambled parts, said characteristics being stored in complementary information.

14. The process of scrambling of the digital video stream, according to at least one of the claims 1 to 13, **characterized in that** said random values used by the aforementioned scrambling tools are generated by a generator of random variables and are passed as parameters to these scrambling tools.

15. The process of scrambling of the digital video stream, according to at least one of the claims 1 to 14, **characterized in that** the decision concerning scrambling to be performed on the video stream is automatic and auto-adaptive according to the user profile.

16. The process of scrambling of the digital video stream, according to at least one of the claims 1 to 15, **characterized in that** the decision concerning scrambling to be performed on the video stream is automatic and auto-adaptive according to the transport conditions.

17. The process of scrambling of the digital video stream, according to at least one of the claims 1 to 16, **characterized in that** it is applied to structured digital video streams derived from a digital video norm or standard.

18. A system of implementation of the process according to any of the previous claims, **characterized in that** it comprises a module for analyzing the structure and the visual content of the digital video stream (21), a library module of scrambling tools (22), a module of scrambling of the digital video stream (122) and an inference or decisional engine module (24) capable of making a synthesis of analysis information and available scrambling tools, and generating scrambling instructions according to the results of the analysis, available scrambling tools, user profile and transport conditions, in conformity with the rule base that it contains.

## Patentansprüche

1. Verschlüsselungsverfahren für digitale Videoströme, automatisch und adaptativ, mit folgenden Phasen:
* Analyse der Struktur und des visuellen Inhalts des genannten digitalen Videostroms
* Verschlüsseln des digitalen Videostroms
**gekennzeichnet dadurch, dass** die Verschlüsselungsphase durch eine Entscheidungs- oder Inferenzmaschine geregelt wird, die aus einer Bibliothek von möglichen Verschlüsselungswerkzeugen das oder die Verschlüsselungswerkzeug(e) für den digitalen Videostrom auswählt, je nach besagter Analysephase, digitale Informationen bezüglich der Merkmale des Benutzers, für den der verschlüsselte digitale Videostrom, der aus dem Verfahren hervorgeht, bestimmt ist, und Beförderungsbedingungen für die digitale Daten, die aus dem Verfahren hervorgehen, entsprechend einer Regelbasis für vorherbestimmte Verschlüsselungen.

2. Verschlüsselungsverfahren für digitale Videoströme, nach Anspruch 1, **gekennzeichnet dadurch, dass** die Inferenzmaschine autoadaptiv und selbstentscheidend ist.

3. Verschlüsselungsverfahren für digitale Videoströme nach Anspruch 2, **gekennzeichnet dadurch, dass** die Inferenzmaschine die Fähigkeit zum Selbstlernen besitzt und aus vorher aufgestellten Regeln neue Entscheidungsregeln erstellt.

4. Verschlüsselungsverfahren für digitale Videoströme nach Anspruch 1, **gekennzeichnet dadurch, dass** die Analyse mehrere Skalierbarkeitsniveaus besitzt.

5. Verschlüsselungsverfahren für digitale Videoströme nach Anspruch 1, **gekennzeichnet dadurch, dass** die Verschlüsselungswerkzeuge mehrere Skalierbarkeitsniveaus besitzen.

6. Verschlüsselungsverfahren für digitale Videoströme, nach mindestens eine der Patentansprüche 1, 4 oder 5, **gekennzeichnet dadurch dass** die Verschlüsselung mehrere Niveaus der granularen Skalierbarkeit besitzt.

7. Verschlüsselungsverfahren für digitale Videoströme, nach Anspruch 1, **gekennzeichnet dadurch dass** die Inferenzmaschine die Fähigkeit besitzt, Verschlüsselungs-Entscheidungen zu fällen um die Erfordernisse der Telekommunikationsnetze zu erfüllen, durch die die komplementäre Information an den Benutzer übertragen wird, für den die verschlüsselte Übertragung bestimmt ist.

8. Verschlüsselungsverfahren für digitale Videoströme, nach Anspruch 1, **gekennzeichnet dadurch dass** es die Fähigkeit besitzt, aus der Analyse des Videostroms in Echtzeit Verschlüsselungs-Entscheidungen zu fällen.

9. Verschlüsselungsverfahren für digitale Videoströme, nach Anspruch 8, **gekennzeichnet dadurch dass** es die Fähigkeit hat, in Echtzeit die Menge der komplementären Informationen je nach den ausgehenden unmittelbaren Ressourcen und den Beförderungsbedingungen der Telekommunikationsnetze anzupassen.

10. Verschlüsselungsverfahren für digitale Videoströme, nach Anspruch 1, **gekennzeichnet dadurch dass** es die Fähigkeit besitzt, die Analyse und die Verschlüsselung vor der Übertragung an den Benutzer durchzuführen.

11. Verschlüsselungsverfahren für digitale Videoströme, nach mindestens einem der Ansprüche 1 bis 10, **gekennzeichnet dadurch dass** die Inferenzmaschine die Fähigkeit besitzt, Verschlüsselungs-Entscheidungen zu fällen, um die Erfordernisse, Merkmale und Leistungen der Set-Top-Box des Benutzers zu berücksichtigen, für den die verschlüsselte Übertragung bestimmt ist.

12. Verschlüsselungsverfahren für digitale Videoströme, nach mindestens einem der Ansprüche 1 bis 11, **gekennzeichnet dadurch dass** die Inferenzmaschine die Fähigkeit besitzt, Verschlüsselungs-Entscheidungen in Abhängigkeit von den vorher gefällten Verschlüsselungs-Entscheidungen zu fällen.

13. Verschlüsselungsverfahren für digitale Videoströme, nach mindestens einem der Ansprüche 1 bis 12, **gekennzeichnet dadurch dass** die Verschlüsselungswerkzeuge, die benutzt werden, um einen Teil der Übertragung zu behandeln, von den ursprünglichen Merkmale der vorher verschlüsselten Teile parametriert werden, wobei die Merkmale in der Zusatzinformation gespeichert werden.

14. Verschlüsselungsverfahren für digitale Videoströme, nach mindestens einem der Ansprüche 1 bis 13, **gekennzeichnet dadurch dass** die von den Verschlüsselungswerkzeugen benutzten zufälligen Werte von einem Generator von zufälligen Variablen erzeugt werden und in Parametern an die genannten Verschlüsselungswerkzeuge weitergegeben werden.

15. Verschlüsselungsverfahren für digitale Videoströme, nach mindestens einem der Ansprüche 1 bis 14, **gekennzeichnet dadurch dass** die Entscheidung über die bei dem Videostrom durchzuführende Verschlüsselung automatisch und autoadaptativ ist, je nach dem Profil des Benutzers.

16. Verschlüsselungsverfahren für digitale Videoströme, nach mindestens einem der Ansprüche 1 bis 15, **gekennzeichnet dadurch dass** die Entscheidung über die bei dem Videostrom durchzuführende Verschlüsselung automatisch und autoadaptativ ist, je nach den Beförderungsbedingungen.

17. Verschlüsselungsverfahren für digitale Videoströme, nach mindestens einem der Ansprüche 1 bis 16, **gekennzeichnet dadurch dass** es auf strukturierte digitale Videoströme mit einer Norm oder einem digitalen Videostandard angewendet wird.

18. System zur Durchführung des Verfahrens nach einem beliebigen der vorherigen Ansprüche, **gekennzeichnet dadurch dass** es ein Analysemodul für die Struktur und den visuellen Inhalts des digitalen Videostroms (21) umfasst, ein Modul als Bibliothek von Verschlüsselungswerkzeugen (22), ein Verschlüsselungsmodul für den digitalen Videostrom (122) und ein Modul als Entscheidungs- oder Inferenzmaschine (24), das die Synthese der Analyseinformationen und der verfügbaren Verschlüsselungswerkzeuge vornimmt und die Verschlüsselungsanweisungen erzeugt, je nach den Ergebnissen der Analyse, den verfügbaren Verschlüsselungswerkzeugen, dem Profil des Benutzers und den Beförderungsbedingungen, entsprechend der Regelbasis, die es enthält.
